# EUROPÄISCHE PATENTSCHRIFT

(11) **EP 0 607 792 B1**
(45) Veröffentlichungstag und Bekanntmachung des Hinweises auf die Patenterteilung: **01.04.1998**
(21) Anmeldenummer: 94100079.6
(22) Anmeldetag: 05.01.1994
(51) Int. Cl.: C09D 175/04, C09D 151/08, C08G 18/63

(54) **Emulgatorfreies, hitzehärtbares Überzugsmittel, dessen Herstellung und Verwendung**
Emulsifier free, thermosetting coating composition, its preparation and use
Composition de revêtement thermodurcissable, exempte d'émulsifiant, sa préparation et son utilisation

(30) Priorität: 13.01.1993 DE 4300616; 28.05.1993 DE 4317864; 21.09.1993 DE 4332067
(43) Veröffentlichungstag der Anmeldung: 27.07.1994
(73) Patentinhaber: Herberts Gesellschaft mit beschränkter Haftung, 42285 Wuppertal (DE)
(72) Erfinder: Bederke, Klaus, Dr., D-45549 Sprockhövel (DE); Duecoffre, Volker, D-42119 Wuppertal (DE); Flosbach, Carmen, Dr., D-42115 Wuppertal (DE); Göldner, Wolfgang, Dr., D-42579 Heiligenhaus (DE); Schubert, Walter, Dr., D-42349 Wuppertal (DE)
(74) Vertreter: Türk, Gille, Hrabal, Leifert

(56) Entgegenhaltungen:
- EP-A- 0 072 979
- GB-A- 2 254 328
- US-A- 3 993 849

## Beschreibung

Die Erfindung betrifft ein hitzehärtbares Überzugsmittel auf der Basis selbstemulgierender Copolymerer, insbesondere auf Polyesteroligomer-Polyacrylatbasis im Gemisch mit verkapptem Polyisocyanat und Neutralisationsmittel, das übliche Lackzusatzstoffe wie Pigmente, Füllstoffe und/oder organische Lösemittel enthalten kann. Das wäßrige Überzugsmittel ist für die Herstellung von Lackierungen, insbesondere für Mehrschichtlackierungen als Basislack, bevorzugt als Klarlack verwendbar.

Der Aufbau von Mehrschichtlackierungen ist insbesondere aus dem Sektor des Kraftfahrzeugbaus bekannt. Dabei ist es günstig, auf einer Basislackschicht nach kurzer Antrocknungszeit "naß-in-naß" eine Klarlackschicht aufzubringen, worauf dann ein gemeinsames Einbrennen erfolgt.

Wäßrige Lacke, insbesondere Klarlacke, werden in der Literatur beschrieben. In der DE-PS-28 06 497 wird eine Mehrschichtlackierung mit einem Klarlacküberzug als Deckschicht beschrieben, wobei dieser Klarlack auch wasserverdünnbar sein soll. Wasserverdünnbare Klarlacke werden jedoch nicht definiert. Als Basislack-Überzugsmittel werden Polyester mit hohem Molgewicht und hoher Viskosität, gelöst in Xylol, verwendet, die mit Acrylharzen vermischt werden können. Derartige Lacke haben einen hohen Bedarf an Neutralisationsmittel. Die DE-OS-36 32 617 beschreibt wäßrige Beschichtungsmassen auf der Basis von hochwirksamen Harzen, beispielsweise Polyesterharzen, in denen Harzpartikel, bei denen es sich um Acrylharze handeln kann, dispergiert sind. Die erhaltenen Massen sind instabil und unterliegen einer raschen Phasentrennung.

In der DE-OS-35 37 855 wird die Verwendung von sauren Polykondensaten auf der Basis von Acrylharzen und Polyetherpolyolen beschrieben, die nach ihrer Neutralisation als wasserverdünnbare Bindemittel zur Herstellung von wasserverdünnbaren Einbrennfüllern, Decklacken oder Klarlacken eingesetzt werden können. Die hier eingesetzten Polyetherpolyole verlieren auch nach dem Einbrennen nicht ihre hohe Hydrophilie, so daß Feuchtraum- und Schwefelsäurebeständigkeit dieser Systeme unzureichend sind.

Auch in der EP-A-0 365 775 wird die Verwendung saurer Polyacrylate beschrieben, die nach ihrer Neutralisation und Verdünnung zur Herstellung wasserverdünnbarer Decklacke dienen. Hier wird als Vernetzungsmittel Melaminharz eingesetzt. Die zusätzliche Verwendung von Oligomeren wird nicht beschrieben, ebenso nicht die Vernetzung mit verkappten Polyisocyanaten. Außerdem weisen diese Überzugsmittel noch unbefriedigende High-Solid-Werte (HS-Werte) auf, das heißt sie benötigen einen hohen Gehalt an organischen Lösemitteln, in der Größenordnung von 27 g und mehr, bezogen auf 100 g Harzfestkörpergehalt (entsprechend einem HS-Wert von 73 und weniger).

In dem älteren, nicht vorveröffentlichten deutschen Patent 42 23 183 werden wäßrige Emulsionen auf der Basis von Acrylcopolymeren beschrieben, die im Schoße eines oder mehrerer niedermolekularer Polyester synthetisiert und anschließend mit einem Gemisch aus Melaminharzen und verkappten Polyisocyanaten vernetzt werden.

Die DE-A-38 32 826 beschreibt ein Verfahren zur Herstellung eines Überzuges auf der Basis eines wasserverdünnbaren Polyacrylatharzes und eines Aminoplastharzes. Die Polymerisation des Polyacrylatharzes im Schoße eines Polyesters wird nicht erwähnt.

Diese Polymerisationstechnik wird in der DE-A-39 10 829 beschrieben. Hier handelt es sich jedoch stets um wassergelöste Harze und nicht um wäßrige Emulsionen. Ebenfalls nicht beschrieben wird in der DE-A-39 10 829 die Herstellung eines Acrylatharzes mit hydrophilen und hydrophoben Blöcken.

Aufgabe der Erfindung ist die Bereitstellung von wäßrigen Überzugsmitteln mit geringem Gehalt an organischen Lösemitteln, die zu Überzügen mit hoher Chemikalienbeständigkeit, insbesondere hoher Beständigkeit gegen Säuren und Ölruß, und mit sehr geringer Vergilbungstendenz, führen.

Es hat sich gezeigt, daß diese Aufgabe gelöst werden kann durch ein emulgatorfreies, hitzehärtbares Überzugsmittel in Form einer wäßrigen Emulsion, das einen Gegenstand der Erfindung bildet und enthält:
A) 30 bis 80 Gew.-% eines oder mehrerer, nach Neutralisation mit Basen wasserverdünnbarer Polyesteroligomer-Polyacrylate, erhältlich durch radikalische Polymerisation von
   50 bis 95 Gew.-% eines oder mehrerer Ester ungesättiger Carbonsäuren mit hydrophoben und hydrophilen Anteilen, wobei
   a) die hydrophoben Anteile auf monomeren Estern ungesättigter Carbonsäuren einer Alkoholkomponente mit noch mindestens einer sekundären OH-Gruppe basieren, die im Gemisch mit OH-Gruppen-freien Comonomeren vorliegen können und
   b) die hydrophilen Anteile auf monomeren Estern ungesättigter Carbonsäuren mit primären OH-Gruppen im Alkoholteil und monomeren Estern ungesättigter Carbonsäuren mit COOH-Gruppen basieren, die im Gemisch mit OH-Gruppen-freien Comonomeren vorliegen können, wobei das Zahlenverhältnis von aus den Komponenten b) und a) stammenden primären zu sekundären OH-Gruppen im Copolymeren 1 : 1,5 bis 1 : 2,5 beträgt,
   in 5 bis 50 Gew.-% eines oder mehrerer hydroxyfunktioneller Polyesteroligomerer, erhältlich durch Polykondensation von Diolen und/oder Polyolen und Dicarbonsäuren und/oder deren Derivaten, gegebenenfalls unter Mitverwendung von einem oder mehreren Monoalkoholen und/oder Monocarbonsäuren, mit einem errechneten Molekulargewicht von 200 bis 1000, vorzugsweise von 300 bis 600, einer Hydroxylzahl von 100 bis 600, bevorzugt 200 bis 500, und einer Säurezahl von 0 bis 15, bevorzugt 0 - 1,5, wobei die Monomeren a) und b) in derartigen Mengen eingesetzt werden, daß das erhaltene Polyesteroligomer-Polyacrylat eine Hydroxylzahl von 100 bis 390, eine Säurezahl von 16 bis 50, bevorzugt 20 bis 30 und einem Zahlenmittel des Molekulargewichts (Mn) von 1000 bis 10000, bevorzugt 2000 bis 5000, aufweist (Gew.-% beziehen sich jeweils auf den Festkörpergehalt und addieren sich auf 100); und
B) 70 bis 20 Gew.-% eines oder mehrerer verkappter Polyisocyanate, und/oder eines oder mehrerer Melaminharze, wobei jedoch mindestens eines der Melaminharze ein Hexamethoxymethylmelaminharz ist,
   wobei sich die Gewichtsprozente der Komponenten A) und B) jeweils auf das Festkörpergewicht der Harze beziehen und auf 100 Gew.-% addieren, und das Verhältnis von OH-Gruppen der Komponente A) und verkappten NCO-Gruppen der Komponente B) bei 0,5 : 1 bis 2 : 1, bevorzugt 0,8 : 1 bis 1,2 : 1 liegt,
   sowie Wasser und gegebenenfalls ein oder mehrere organische Lösemittel, Pigmente, Füllstoffe, Katalysatoren und/oder lackübliche Hilfs- und Zusatzstoffe.

Wenn in dem erfindungsgemäßen Überzugsmittel die Komponente B) aus verkappten Polyisocyanaten besteht, so liegt die Komponente A) vorzugsweise in einer Menge von 30 bis 70 Gew.-%, besonders bevorzugt von 40 bis 60 Gew.-% und die Komponente B) vorzugsweise von 70 bis 30 Gew.-%, besonders bevorzugt von 60 bis 40 Gew.-% vor.

Stellt in dem erfindungsgemäßen Überzugsmittel die Komponente B) ein oder mehrere Melaminharze dar, so liegt die Komponente A) vorzugsweise in einer Menge von 80 bis 55 Gew.-% und die Komponente B) vorzugsweise in einer Menge von 20 bis 45 Gew.-% vor.

Die Bindemittelkomponente A) des erfindungsgemäßen Überzugsmittels kann durch Polymerisation der Komponenten a) und b) in dem Polyesteroligomeren hergestellt werden. Beispielsweise kann man so vorgehen, daß 20 bis 50 Gewichtsteile (bezogen auf den Festkörper von A)) mindestens eines hydroxyfunktionellen Polyesteroligomeren, wie vorstehend definiert, vorgelegt werden und darin 80 bis 50 Gewichtsteile (bezogen auf den Festkörper von A)) von Estern ungesättigter Carbonsäuren mit hydrophoben und hydrophilen Anteilen, basierend auf den vorstehend definierten Komponenten a) und b) darin polymerisiert werden. Dabei addieren sich die Gewichtsteile der Komponenten a), b) und Polyesteroligomere auf 100 Gewichtsteile. Die Mengenanteile der Komponenten b) und a) werden so gewählt, daß das Zahlenverhältnis von primären zu sekundären OH-Gruppen im erhaltenen Copolymeren (ohne Berücksichtigung der OH-Gruppen des Polyesteroligomeren) 1 : 1,5 bis 1 : 2,5 beträgt.

Der hydrophobe Anteil a) der Komponente A) der erfindungsgemäßen Überzugsmittel wird durch Copolymerisation von Estern ungesättigter Carbonsäuren mit einer Alkoholkomponente, die noch mindestens eine sekundäre Hydroxylgruppe enthält, in Gegenwart eines Polyesteroligomeren erhalten. Beispiele für die ungesättigte Carbonsäure der ungesättigten Estermonomeren sind (Meth)acrylsäure (unter (Meth)acryl bzw. (meth)acryl wird hier und im Folgenden Methacryl und/oder Acryl bzw. methacryl und/oder acryl verstanden), Maleinsäure und Crotonsäure. Die Alkoholkomponente der Estermonomeren auf der Basis ungesättigter Carbonsäuren enthält bevorzugt 3 bis 25 Kohlenstoffatome. Sie kann auf kurzkettigen aliphatischen Alkoholen, langkettigen aliphatischen Alkoholen sowie auf Kondensationsprodukten von Alkoholen oder Glycidylverbindungen mit Fettsäuren basieren.

Die selbstemulgierenden Copolymeren der Komponente A) werden im Folgenden zur Vereinfachung auch als Acrylcopolymere bezeichnet. Sie basieren jedoch nur bevorzugt auf Monomeren auf der Basis von Estern der (Meth)acrylsäure; der vereinfachende Ausdruck schließt die Ester anderer, ungesättigter Carbonsäuren, wie vorstehend definiert, ein.

Beispiele für die hydrophoben Monomeren mit sekundären OH-Funktionen sind:
Hydroxypropyl(meth)acrylat, Addukte aus Glycidyl(meth)acrylat und gesättigten kurzkettigen Fettsäuren mit C₁ - C₃ Alkylresten, z.B. Essigsäure oder Propionsäure, sowie Addukte aus Cardura E (Glycidylester der Versaticsäure) mit ungesättigten COOH-funktionellen Verbindungen, wie z.B. Acryl- bzw. Methacrylsäure, Maleinsäure, Crotonsäure, Addukte aus Cardura E mit ungesättigten Anhydriden wie z.B. Maleinsäureanhydrid, Umsetzungsprodukte aus Glycidyl(meth)acrylat mit gesättigten verzweigten oder unverzweigten Fettsäuren mit C₄ - C₂₀ -Alkylresten, z.B. Butansäure, Capronsäure, Laurinsäure, Palmitinsäure, Stearinsäure.

Der hydrophile Anteil b) der Komponente A) der erfindungsgemäßen Überzugsmittel wird aus Monomeren auf der Basis von Estern ungesättigter Carbonsäuren, wie (Meth)acrylsäure, Maleinsäure und Crotonsäure mit mindestens einer primären OH-Gruppe im Alkoholteil hergestellt. Die Alkoholkomponente der ungesättigten Estermonomeren kann beispielsweise 2 bis 18 Kohlenstoffatome aufweisen.

Beispiele für die Monomeren zum Aufbau des hydrophilen Anteils der Komponente A) sind:
Hydroxyalkylester der Acrylsäure und/oder Methacrylsäure mit einer primären OH-Gruppe und einem C₂ - C₃ -Hydroxyalkylrest wie Hydroxyethyl (meth)acrylat, sowie Hydroxyalkylester der Acrylsäure und/oder Methacrylsäure mit einer primären OH-Gruppe und einem C₄ - C₁₈-Hydroxyalkylrest wie z.B. Butandiolmonoacrylat, Hydroxyhexylacrylat, Hydroxyoctylacrylat und die entsprechenden Methacrylate und Umsetzungsprodukte von Hydroxyethyl(meth)arylat mit Caprolacton.

Die hydrophilen Anteile der Komponente A) enthalten auch Carboxylgruppen, zu deren Einführung bei der Herstellung der Komponente A carboxylfunktionalisierte Monomere mitverwendet werden, wie z.B. Acrylsäure, Methacrylsäure und Crotonsäure. Weitere verwendbare carboxylfunktionalisierte Monomere sind ungesättigte Anhydride wie Maleinsäureanhydrid, sowie Halbester von Maleinsäureanhydrid durch Anlagerung von gesättigten aliphatischen Alkoholen wie z.B. Ethanol, Propanol, Butanol und/oder Isobutanol.

Bei der Herstellung der Komponente A) können weitere Comonomere mitverwendet werden, die frei von OH-Gruppen sind. Beispiele hierfür sind langkettige, verzweigte oder unverzweigte ungesättigte Monomere, wie Alkyl(meth)acrylate mit C₈ - C₁₈-Ketten im Alkylteil, z.B. Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Laurylacrylat, Isobornyl(meth)acrylat, 4-Tertiärbutylcyclohexylmethacrylat. Weitere Beispiele sind kurz- und mittelkettige, verzweigte oder unverzweigte ungesättigte Monomere, wie Alkyl(meth)acrylate mit C₁ - C₇-Ketten im Alkylteil, z.B. Methyl(meth)acrylat, Ethyl(meth)acrylat, Propyl(meth)acrylat, Butyl(meth)acrylat, Isobutyl(meth)acrylat, Tertiärbutyl(meth)acrylat, Pentyl(meth)acrylat, Hexyl(meth)acrylat, Cyclohexyl(meth)acrylat. Es können auch aromatische Vinylverbindungen, wie Styrol und Styrolderivate, wie Vinyltoluol und p-Methylstyrol als Comonomere mitverwendet werden.

Die Mengenanteile der weiteren Comonomeren können so gewählt werden, daß die gewünschten Spezifikationen bezüglich Molmasse, OH-Gruppenverhältnis, OH-Zahl und Säurezahl erzielt werden.

Wie erwähnt, erfolgt die Herstellung der Copolymeren der Komponente A) durch Copolymerisation der Komponenten a) und b) in Gegenwart eines Polyesteroligomeren. Es handelt sich um eine radikalische Copolymerisation, bei der die Mengen der Monomeren und Polyesteroligomeren so abgestimmt werden, daß die gewünschten Spezifikationen bezüglich Molmasse, OH-Gruppenverhältnis, OH-Zahl und Säurezahl erzielt werden.

Die Herstellung erfolgt beispielsweise als radikalische Lösungspolymerisation in Anwesenheit eines Polyesteroligomeren und eines Radikalinitiators, wie sie dem Fachmann bekannt ist. Beispiele für Radikalinitiatoren sind Dialkylperoxide, wie Di-tert.-Butylperoxid, Di-cumylperoxid; Diacylperoxide, wie Di-benzoylperoxid, Dilaurylperoxid; Hydroperoxide, wie Cumolhydroperoxid, tert.-Butylhydroperoxid; Perester, wie tert.-Butylperbenzoat, tert.-Butyl-perpivalat, tert.-Butyl-per-3,5,5-trimethylhexanoat, tert.-Butyl-per-2-ethylhexanoat; Peroxiddicarbonate, wie Di-2-ethylhexylperoxydicarbonat, Dicyclohexylperoxydicarbonat; Perketale, wie 1,1-Bis-(tert.-Butylperoxy)3,5,5-trimethylcyclohexan, 1,1-Bis-(tert.-Butyl-peroxy)cyclohexan; Ketonperoxide, wie Cyclohexanperoxid, Methylisobutylketonperoxid und Azo-Verbindungen, wie 2,2'-Azo-bis(2,4-dimethyl-valeronitril), 2,2'-Azo-bis(2-methylbutyronitril), 1,1'-Azo-bis-cyclohexancarbonitril, Azo-bis-isobutyronitril.

Die Polymerisationsinitiatoren werden im allgemeinen beispielsweise in einer Menge von 0,1 bis 4 Gew.-%, bezogen auf die Monomeren-Einwaage, zugesetzt.

Die radikalische Polymerisation kann im Eintopfverfahren unter Erzielung einer statistischen Verteilung von hydrophoben und hydrophilen Anteilen durchgeführt werden.

Es kann z.B. so gearbeitet werden, daß alle notwendigen Monomeren sowie der oder die Initiatoren in einem Vorratsgefäß gemischt werden; anschließend wird über einen Zeitraum von z.B. 5 Stunden in ein z.B. 140°C heißes Gemisch aus einem oder mehreren Lösemitteln und Polyesteroligomeren oder Polyesteroligomeren allein unter Rühren zudosiert. Die hierbei entstehenden Copolymeren besitzen dann eine statische Verteilung der primären und sekundären Hydroxy- sowie Carboxyfunktionen.

Es ist jedoch auch möglich, eine Blockpolymerisation zur Erzielung von Copolymerisaten mit hydrophoben und hydrophilen Blöcken durchzuführen.

Zur Herstellung der Blockcopolymerisate kann in üblicher Arbeitsweise vorgegangen werden. Es können beispielsweise zunächst Gemische aus hydrophoben Monomeren (gegebenenfalls zusammen mit weiteren Comonomeren) polymerisiert werden, worauf dann hydrophile Monomere (gegebenenfalls mit Comonomeren) zudosiert und weiter polymerisiert werden. In der Praxis ist es beispielsweise möglich, zuerst ein Gemisch aus hydrophoben, hydroxyfunktionellen Monomeren, (Meth)acrylsäureestern sowie gegebenenfalls z.B. Vinylaromaten zuzudosieren und anschließend ein weiteres Gemisch aus hydrophilen, hydroxyfunktionellen Monomeren, (Meth)acrylsäureestern, Vinylaromaten und COOH-funktionellen Monomeren zuzudosieren. Die hierbei entstehenden Copolymeren besitzen dann ein hydrophobes und ein hydrophiles Kettenende, wodurch z.B. diesen Copolymeren ein Emulgatorcharakter zukommen kann.

Durch die Copolymerisation der Komponenten a) und b) in Gegenwart von Polyesteroligomeren, bei der Herstellung der Komponente A) kann die Menge der eingesetzten und später gegebenenfalls abzudestillierenden Lösemittel stark reduziert werden. Es ist sogar möglich, Lösemittel völlig zu vermeiden und allein die Polyesteroligomeren als Lösemittel für die Herstellung der Komponente A) zu verwenden.

Die bei der Herstellung der Komponente A) verwendeten Polyesteroligomeren können z.B. aus einem oder mehreren Diolen und/oder Polyolen, gegebenenfalls in Anwesenheit von einem oder mehreren Monoalkoholen, durch Kondensation mit einer oder mehreren Dicarbonsäuren und/oder deren Derivaten hergestellt werden. Die Polykondensation erfolgt nach üblichen, dem Fachmann geläufigen Verfahren, beispielsweise in Gegenwart von üblichen Veresterungskatalysatoren und beispielsweise bei erhöhten Temperaturen von z.B. 180 bis 230°C in der Schmelze.

Beispiele für verwendbare Polyole sind solche mit mehr als zwei OH-Gruppen, wie aliphatische Triole und Tetrole mit 2 bis 6 Kohlenstoffatomen, wie Trimethylolethan, Trimethylolpropan, Glycerin, 1,2,4-Butantriol, 1,2,6-Hexantiol und Pentaerythrit.

Ebenfalls möglich ist es, einen oder mehrere monofunktionelle Alkohole, wie z.B. Monoalkanole mit verzweigten oder unverzweigten Alkylresten, mit beispielsweise 1 bis 20 C-Atomen miteinzusetzen. Beispiele hierfür sind Methanol, Ethanol, Propanol, Isopropanol, Laurylalkohol und Stearylalkohol.

Beispiele für die Dicarbonsäuren sind aliphatische gesättigte und ungesättigte Dicarbonsäuren, wie z.B. Maleinsäure, Fumarsäure, Bernsteinsäure, Adipinsäure, Azelainsäure, Sebacinsäure; cycloaliphatische gesättigte und ungesättigte Dicarbonsäuren und aromatische Dicarbonsäuren, wie Phthalsäure, Isophthalsäure, Tetra-, Hexa-, Endomethylentetrahydrophthalsäure, Endoethylentetrahydrophthalsäure und Cyclohexandicarbonsäure (1,2; 1,3 und 1,4), Itaconsäure, Muconsäure und Camphersäure oder gegebenenfalls deren mögliche Anhydride.

Ebenfalls möglich ist die Mitverwendung von monofunktionellen Carbonsäuren, wie z.B. Essigsäure, Propionsäure, Benzoesäure, Laurylsäure oder Stearylsäure.

Beispiele für verwendbare Diole sind aliphatische Diole, wie z.B. Ethylenglykol, Propylenglykol-(1,3 und 1,2), Butandiol, Hexandiol-(1,6), Neopentylglykol, 2-Butyl-2-ethyl-propandiol-1,3; Polyetherglykole des Ethylens und Propylens mit bis zu 6 Monomerbausteinen, wie Diethylenglykol, Triethylenglykol, Tetraethylenglykol und Hexaethylenglykol; und cycloaliphatische Diole, wie 1,3-Dimethylolcyclohexan und 1,4-Dimethylolcyclohexan.

Die erfindungsgemäßen Überzugsmittel können als Vernetzer (Komponente B)) ein oder mehrere verkappte Polyisocyanate enthalten. Beispiele für den verkappten Polyisocyanaten zugrunde liegende einsetzbare Polyisocyanate sind cycloaliphatische, aliphatische oder aromatische Polyisocyanate wie Tetramethylen-diisocyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4'-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekanten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung.

In diesen bekannten Prepolymeren entspricht das Verhältnis von Isocyantgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.

Die Isocyanatgruppierungen der Polyisocyanate sind vollständig verkappt. Als Verkappungsmittel können übliche Verkappungsmittel verwendet, wie sie beispielsweise auf dem Lacksektor eingesetzt werden. Beispiele für verwendbare Verkappungsmittel sind Malonsäuredimethylester, Malonsäurediethylester, Acetessigsäureethylester, epsilon-Caprolactam, Acetanilid, Acetylaceton, Acetomoxim, Propandiol-1.2 und/oder Butanonoxim, wobei das zuletzt genannte Verkappungsmittel bevorzugt ist.

Die Verkappung der Polyisocyanate kann z.B. durch Erwärmen ein oder mehrerer Polyisocyanate mit dem Verkappungsmittel erfolgen. Beispielsweise können ein oder mehrere Polyisocyanate vorgelegt und unter Rühren erhitzt werden, z.B. auf etwa 80°C, und das Verkappungsmittel (beispielsweise während etwa 10 min.) zudosiert werden. Es wird solange gerührt, bis die NCO-Zahl kleiner als 0,1 % beträgt. Es ist auch möglich, ein oder mehrere Polyisocyanate mit einem Gemisch aus zwei oder mehreren Verkappungsmitteln zu verkappen.

Der Vorteil der Verwendung von zwei oder mehreren unterschiedlichen Polyisocyanaten und/oder zwei oder mehreren unterschiedlichen Verkappungsmitteln liegt darin, daß hiermit die Vernetzung über einen weiten Temperaturbereich erfolgen kann. Die zu vernetzenden Überzugsfilme (Lackfilme) sind somit auch über einen längeren Zeitraum nur teilvernetzt, wodurch die Abgabe von Wasser, Colösemitteln bzw. Verkappungsmittel sehr lange möglich ist, ohne die Oberflächen zu beeinträchtigen.

Die Vernetzerkomponente B) kann sich aus einem oder mehreren Melaminharzen zusammensetzen, wobei mindestens ein Melaminharz ein Hexamethyloxymethylmelaminharz (HMMM) sein muß. Die Melaminharze, die mit HMM-Melaminharzen kombiniert werden können, können wasserlöslich oder wasserunlöslich sein.

Beispiele für Hexamethyloxymethyl-Melaminharze (HMM-Melaminharze) sind Handelsprodukte wie z.B. Maprenal 900 oder Maprenal 904. Sie können zur Vernetzung einen externen Säurekatalysator wie z.B. p-Toluolsulfonsäure benötigen. Der Säurekatalysator kann ionisch mit Aminen wie z.B. Triethylamin oder auch nicht-ionisch wie z.B. mit Cardura E, dem Glycidylester der Versaticsäure blockiert sein.

Beispiele für in Wasser unlösliche Aminharzvernetzer der erfindungsgemäßen Überzugsmittel sind in Wasser unlösliche butanol- oder isobutanolveretherte Melamine, wie z.B. die Handelsprodukte Setamin US 138 oder Maprenal MF 619 und mischveretherte Melamine, die sowohl butanol- als auch methanolverethert sind, wie z.B. Cymel 254.

Beispiele für wasserlösliche bzw. -verträgliche Melaminharze sind z.B. Methyl-veretherte Melamine wie z.B. Cymel 325, Cymel 327, Cymel 350 und Cymel 370, Maprenal MF 927.

Der Vorteil der Verwendung von zwei oder mehreren unterschiedlichen Melaminharzen liegt darin, daß hiermit die Vernetzung über einen weiten Temperaturbereich erfolgen kann. Die zu vernetzenden Überzugsfilme (Lackfilme) sind somit auch über einen längeren Zeitraum nur teilvernetzt, wodurch die Abgabe von Wasser und Colösemitteln sehr lange möglich ist, ohne die Oberflächen zu beeinträchtigen.

Notwendig ist aber stets die Verwendung mindestens eines HMMM-Harzes, da hiermit insbesondere eine hohe Säurebeständigkeit der vernetzten Überzugsmittel erreicht wird.

Die erfindungsgemäßen Überzugsmittel können lackübliche Lösemittel in Mengen von beispielsweise bis zu 20 Gew.-%, z.B. 5 bis 20 Gew.-%, enthalten. Beispiele für derartige Lösemittel sind organische Lösemittel, wie aliphatische und aromatische Kohlenwasserstoffe, beispielsweise Toluol, Xylole, Gemische aliphatischer und/oder aromatischer Kohlenwasserstoffe sowie Ester, Ether und Alkohole.

Zur Herstellung der Überzugsmittel können übliche Additive (z.B. Pigmente, Füllstoffe, Hilfs- und Zusatzstoffe) zugesetzt werden, wie sie auf dem Lacksektor geläufig sind. Die Mengen liegen im üblichen, dem Fachmann geläufigen, Bereich.

Beispiele für solche Additive sind Pigmente, beispielsweise farbgebende Pigmente, wie Titandioxid oder Ruß und Effektpigmente, wie Metallschuppenpigmente und/oder Perlglanzpigmente. Die erfindungsgemäß bereitgestellten Bindemittelzusammensetzungen eignen sich besonders günstig für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Weitere Beispiele für Additive sind lackübliche Füllstoffe, wie z.B. Talkum und Silikate und Hilfs- und Zusatzstoffe, wie Weichmacher, Lichtschutzmittel, Stabilisatoren und Verlaufsmittel, wie Silikonöle und Katalysatoren. Diese werden ebenfalls in übliche, dem Fachmann geläufigen, Mengen eingesetzt.

Zur Bereitung der wäßrigen Emulsionen können übliche Verfahren angewendet werden, die dem Fachmann geläufig sind. So können die Komponenten A) und B) beispielsweise miteinander vermischt, neutralisiert und emulgiert werden. Es ist auch möglich, zunächst die Komponente A) zu neutralisieren und anschließend mit der Vernetzerkomponente B) zu vermischen, worauf in Wasser emulgiert wird.

In der Praxis kann beispielsweise so vorgegangen werden, daß ein lösemittelhaltiges Polyester-Acryloligomer gegebenenfalls weitgehend von Lösemitteln befreit wird, bevorzugt durch Destillation unter vermindertem Druck. Anschließend wird das Harz mit Basen teilweise oder ganz neutralisiert. Es können hierzu lackübliche Basen verwendet werden, wie Ammoniak oder tertiäre Amine, z.B. Triethylamin, Dimethylethanolamin oder Triethanolamin. Diese Neutralisation kann beispielsweise durch langsames Zulaufen von Basen während beispielsweise über 5 min. erfolgen. Dann können ein oder mehrere verkappte Polyisocyanate ebenfalls in das noch warme Polyesteroligomer-Acrylatgemisch eindosiert werden, was beispielsweise in einem Zeitraum von 5 bis 10 min. erfolgen kann.

Anschließend wird in das warme Harzgemisch vollentsalztes Wasser, z.B. in 60 bis 90 Minuten, eindosiert, beispielsweise unter intensivem Mischem. Die Herstellung der Dispersion kann dabei durch Erwärmen der Wasserphase unterstützt werden. Als Mischaggregate sind beispielsweise schnellaufende Rührer oder Rotor/Stator-Mischer geeignet. Es ist auch möglich, das Dispersionsergebnis durch Hochdruck- oder Ultraschall-Homogenisatoren zu verbessern. Das Verfahren kann kontinuierlich oder diskontinuierlich geführt werden. Man erhält eine wäßrige Öl-in-Wasser-Emulsion, die lagerstabil ist und mit Wasser ohne Probleme auf geringere, zur Applikation geeignete Festkörpergehalte eingestellt werden kann. Additive, wie Pigmente, Füllstoffe und andere Zusätze können je nach Bedarf während der Herstellung der Emulsionen und/oder nach deren Herstellung zugesetzt werden.

Ebenfalls möglich ist es, das Polyesteroligomer-Acrylat teilweise oder vollständig mit Basen zu neutralisieren und anschließend mit so viel Wasser zu emulgieren, daß eine Wasser-in-Öl-Emulsion entsteht. Die Wasser-in-Öl-Emulsion kann anschließend gelagert, dann jeweils zur Herstellung des Überzugsmittels (Lackherstellung) mit Additiven und Vernetzern gemischt und mit Wasser oder Lösemittel-Wasser-Gemischen auf die entsprechende Applikationsviskosität eingestellt werden. Dieses Verfahren hat den Vorteil, daß hierbei Additive und Vernetzer in die Harzphase und nicht, wie manchmal unerwünscht, in die wäßrige Phase gelangen.

Die erhaltenen wäßrigen Emulsionen besitzen z.B. einen HS-Wert von 80 bis 90. Sie können beispielsweise einen Festkörperbereich von 25 bis 55 Gew.-%, bezogen auf die fertige Dispersion, aufweisen. Zur Applikation können sie gegebenenfalls mit Wasser, z.B. auf eine geeignete Spritzviskosität verdünnt werden.

Die erfindungsgemäßen Überzugsmittel sind für Überzüge geeignet, die auf einer Vielzahl von Substraten haften, wie beispielsweise Holz, Textilien, Kunststoff, Glas, Keramik und insbesondere Metall.

Das erfindungsgemäße Überzugsmittel wird nach bekannten Verfahren, wie z.B. Spritzen, Tauchen, Rollen oder Rakeln appliziert. Dabei wird auf das gegebenenfalls schon mit weiteren Lackschichten versehene Substrat das Überzugsmittel aufgetragen. Nach einer Abdunstphase wird das applizierte Überzugsmittel durch Erwärmen vernetzt. Die Einbrenntemperaturen liegen z.B. bei 100 bis 180°C, bevorzugt bei 110 bis 160°C. Die Schichtdicke des eingebrannten Films beträgt etwa 15 bis 50 µm. Dabei entsteht ein vernetzter, harter, glänzender sowie säurebeständiger Lacküberzug.

Die Vernetzung kann gegebenenfalls katalysiert werden. Hierzu sind lackübliche Katalysatoren geeignet, wie beispielsweise Dibutylzinndilaurat. Der Katalysatorzusatz ist besonders bevorzugt bei der Verwendung von Polyisocyanaten als Komponente 8). Insbesondere Melaminharze können auch ohne Katalysator eingesetzt werden.

Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmitteln können beispielsweise Basislacke überlackiert werden, die übliche Decklackpigmente enthalten können; bevorzugt enthalten sie Effektpigmente, wie z.B. Metallic-Pigmente. Als Bindemittelbasis des Basislacks werden bevorzugt Polyester, Polyurethan- oder Acrylatharze eingesetzt. Diese Bindemittel können gegebenenfalls über Vernetzer, z.B. Melaminoder Isocyanatderivate, vernetzt werden.

Im folgenden werden einige Beispiele für weitere Basislacke aufgeführt, die bevorzugt mit erfindungsgemäß bereiteten pigmentfreien Klar- oder pigmenthaltigen Decklacken beschichtet werden können.

Wasserbasislacke auf der Basis von 50 bis 95 Gew.-% eines wäßrigen epoxidfunktionalisierten Emulsionspolymerisats und 95 bis 5 Gew.-% einer anionischen Polyurethandispersion mit einer Säurezahl von 5 bis 10. Als Anreibeharze für in solchen Wasserbasislacken verwendete Pigmente und Additive eignen sich besonders Poly(meth)acrylatharze (beispielsweise in einer Menge bis zu 20 Gew.-%). Beispiele für solche Wasserbasislacke sind in der DE-OS-3 628 124 beschrieben.

Basislacke auf der Basis von Polyestern mit einer Glasübergangstemperatur von > 30°C, Melaminharzen (z.B. partiell butylierten Melaminharzen), Polyharnstoffplastifizierern (beispielsweise auf der Basis eines Addukts aus Butylurethan und Formaldehyd) und einem Copolymer aus Polyethylen (85 Gew.-%) - Vinylacetat (15 Gew.-%) als Wachsdispersion. Solche Basislacke können übliche Additive, wie Celluloseacetobutyrat (beispielsweise mit unterschiedlichen Molekular-Gewichtsbereichen) enthalten. Beispiele für solche Basislacke sind in der EP-A-187 379 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder Acrylharz im Gemisch mit Celluloseethern bzw. Celluloseestern und/oder Polyvinylacetaten. Ferner enthalten sind selbsthärtende Acrylharzbindemittel, die Farbpigmente enthalten und mit Isocyanat reagierende Wasserstoffatome aufweisen, sowie zusätzlich Gemische von in Lösemitteln gelösten Celluloseethern und/oder Celluloseestern und/oder Cellulosehalbestern. Solche Lacke sind z.B. in der DE-OS-29 24 632 beschrieben.

Weitere Beispiele für Basislacke sind in der DE-A-42 28 510 beschrieben.

Sämtliche der vorstehenden Basislackformulierungen können übliche Lackadditive enthalten, sowie übliche Füllstoffe und farbgebende Pigmente sowie auch Metallicpigmente, wie Aluminium- bzw. Edelstahlbronzen und andere Effektpigmente.

Beispiele für Basislacke, die mit Klarlacken auf der Basis erfindungsgemäßer Überzugsmittel beschichtet werden können, sind auch Pulver-Lacke, wie sie beispielsweise in "Products Finishing", April 1976, Seiten 54 bis 56 beschrieben sind.

Die erfindungsgemäßen Überzugsmittel können auch als Basislacke, sowie auch als Füller formuliert werden. Sie eignen sich dann besonders gut zur Herstellung von Mehrschichtlackierungen, z.B. auf dem Kraftfahrzeugsektor. Zur Formulierung als Basislacke oder Füller können übliche Additive, wie sie z.B. vorstehend für Basislacke beschrieben wurden, zugesetzt werden.

Im Vergleich mit üblichen Basislacken ergeben erfindungsgemäße Basislacke Überzüge mit einer verbesserten Feucht-Warm-Beständigkeit, bedingt durch den besonders guten Vernetzungseffekt.

Die erfindungsgemäßen Basislacke können mit üblichen Klarlacken, naß-in-naß, gegebenenfalls nach kurzer Antrocknung, überlackiert werden. Bevorzugt werden sie mit Klarlacken auf der Basis der erfindungsgemäßen Überzugsmittel überlackiert.

Die erfindungsgemäßen Überzugsmittel eignen sich besonders für Decklacke oder Klarlacke und Basislacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, sie kann jedoch auch für andere Zwecke verwendet werden, wie z.B. für Haushaltsgeräte oder in der Möbelindustrie, um besonders säurestabile Überzüge zu erhalten.

In den folgenden Beispielen beziehen sich Teile (T) und % auf das Gewicht.

### Beispiel 1

### Herstellung eines Polyesteroligomeren

336,7 g Trimethylolpropan, 366,8 Adipinsäure und 197 g Hexandiol werden mit 5 g unterphosphoriger Säure in einem mit Rührer, Abscheider, Thermometer und Rückflußkühler versehenen 2-Liter-Dreihalskolben bei 180 bis 230°C in der Schmelze auf eine Säurezahl von 20 verestert.

Anschließend wird unter Vakuum bis zu einer Säurezahl unter 1,5 kondensiert.

Das so erhaltene Produkt hat einen Einbrennrückstand von 94,5 % (1 h, 150°C), eine Viskosität von 3200 mPas (100 %ig), eine Hydroxylzahl von 460 und eine Farbzahl von 30 Hazen.

### Beispiel 2

### Herstellung eines Polyesteroligomer-Acrylatharzes

In einem 6-Liter-Vierhalskolben, der mit Rührer, Rückflußkühler, Tropftrichter und Thermometer versehen ist, werden

| | |
|---|---|
| 505,6 g | Butyldiglykol |
| 561,8 g | Polyesteroligomer aus Beispiel 1 |
| 1421,4 g | Glycidylester der Versaticsäure (Handelsname der Shell AG "Cardura E10) |

vorgelegt und auf 144°C unter Rühren erhitzt. Anschließend wird ein Gemisch aus

| | |
|---|---|
| 196,7 g | Laurylacrylat |
| 196,7 g | Styrol |
| 393,3 g | Isobutylacrylat |
| 398,9 g | Butandiolmonoacrylat |
| 556,2 g | Acrylsäure |
| 612,4 g | Isobutylmethacrylat |
| 22,5 g | Di-tertiat-butylperoxid |
| 134,9 g | Tertiärbutylperoctoat |

in einem Zeitraum von 5 Stunden zudosiert. Dann wird bei ca. 144°C noch 2 Stunden nachpolymerisiert. Das Harz hat einen Festkörper von 88,3 % (1 h 150°C), eine Säurezahl von 26 mg KOH/g und eine Viskosität von 7600 mPas.

### Beispiel 3

### Herstellung einer wäßrigen Polyesteroligomer-Acrylat-Emulsion

In einem 2-Liter-Dreihalskolben, der mit Rührer, Thermometer und Tropftrichter versehen ist, werden 634 g des in Beispiel 2 beschriebenen Polyesteroligomer-Acrylatharzes unter Rühren auf 40°C erhitzt. Anschließend wird durch Zugabe von 15,8 g Dimethylethanolamin neutralisiert. Danach werden 350, 2 g vollentsalztes Wasser unter Rühren in 30 Minuten zudosiert. Die erhaltene Emulsion hat dann einen Festkörper von 55,1 % (1 h 120°C).

### Beispiel 4

### Herstellung eines verkappten Polyisocyanatvernetzergemisches

In einem 4-Liter-Vierhalskolben der mit Rührer, Innenthermometer, Rückflußkühler und Tropftrichter ausgestattet ist, werden 666 T Isocyanurat des Isophorondiisocyanates (Vestanat-T-1890 der Fa. Hüls), 573 T Isocyanurat des Hexamethylendiisocyanates (Tolonate HDI der Fa. Rhone-Poulenc) und 500 T Butylacetat vorgelegt und auf 80°C erwärmt. Innerhalb einer Stunde werden 525 T Butanonoxim zugetropft. Das Reaktionsgemisch wird solange bei 80°C umgesetzt, bis ein NCO-Gehalt von weniger als 0,1 Gew.-% erreicht ist. Nach Zugabe von 190 T Butyldiglykol wird Vakuum angelegt und das Butylacetat bei max. 85°C abdestilliert.

Der erhaltene Vernetzer hat einen Festkörpergehalt von 90 % und ist hochviskos.

### Beispiel 5

### Herstellung eines verkappten Polyisocyanatvernetzergemischs.

In einem 4-Liter-Vierhalskolben der mit Rührer, Innenthermometer, Rückflußkühler und Tropftrichter ausgestattet ist, werden 666 T Isocyanurat des Isophorondiisocyanates (Vestanat-T-1890 der Fa. Hüls), 573 T Isocyanurat des Hexamethylendiisocyanates (Tolonate HDT der Fa. Rhone-Poulenc), 124 T Tetramethylxylylendiisocyanat und 500 T Butylacetat vorgelegt und auf 80°C erwärmt. Innerhalb einer Stunde werden 660 T Butanonoxim zugetropft. Das Reaktionsgemisch wird solange bei 80°C umgesetzt, bis ein NCO-Gehalt von weniger als 0,1 Gew.-% erreicht ist. Nach Zugabe von 225 T Butyldiglykol wird Vakuum angelegt und das Butylacetat bei max. 85°C abdestilliert.

Der erhaltene Vernetzer hat einen Festkörpergehalt von 90 % und ist hochviskos.

### Beispiel 6

### Herstellung eines wasserverdünnbaren Klarlackes

200 g der wäßrigen Polyesteroligomer-Acrylatemulsion aus Beispiel 3 und 100,8 g des verkappten Polyisocyanatgemisches aus Beispiel 4 wurden intensiv mehrere Minuten unter Rühren gemischt, anschließend wurden 3,1 g eines handelsüblichen sterisch gehinderten Amins (HALS) zugesetzt. Zuletzt wurden 55 g vollentsalztes Wasser zugegeben. Mit 17,6 g vollentsalztem Wasser wurde zuletzt auf Spritzviskosität eingestellt.

### Beispiel 7

| | |
|---|---|
| wie Beispiel 6 aber | Polyisocyanat aus Beispiel 5 17 g vollentsalztes Wasser zur Einstellung |

Die Lacke aus Beispiel 6 und 7 wurden auf handelsüblichen Basislacken mit einer Verarbeitungsviskosität von 30" AK₄ bei 20°C im üblichen Naß-in-Naß-Verfahren in zwei Spritzgängen zu Trockenfilmen von 30 bis 45 µm appliziert. Die erhaltenen Filme wurden nach der Applikation 6 Minuten abgelüftet (abgedunstet), 10 Minuten bei 80°C vorgeliert und zuletzt 20 Minuten bei 150°C eingebrannt. Sie besaßen dann eine ausgezeichnete Härte, sehr hohen Glanz und erfüllten industriell übliche Öl/Ruß-Tests (Opel-Spezifikation GME 60403) ohne Veränderung der Oberfläche.

### Beispiel 8

### Herstellung eines wasserverdünnbaren Klarlackes

592 g der wäßrigen Polyesteroligomer-Acrylat-Emulsion aus Beispiel 3 und 61,5 g eines HMMM-Harzes (Cymel 303^{R}) sowie 29,2 g eines Butanol-veretherten MH (Maprenal MF 3615^{R}) werden unter Rühren intensiv miteinander gemischt und anschließend 2,0 g eines handelsüblichen Säurekatalysators zugesetzt. Zuletzt werden 286 g vollentsalztes Wasser zugegeben. Mit 20 g vollentsalztem Wasser wurde zuletzt auf Spritzviskosität eingestellt.

### Beispiel 9

### Herstellung eines wasserverdünnbaren Klarlackes

Es wurde wie in Beispiel 8 verfahren, aber die Melaminharze durch
29,2 g Setamin US-138^{R} und
61,5 g Maprenal MF 904^{R}
ersetzt.

### Beispiel 10

Die Lacke aus Beispiel 8 und 9 wurden auf handelsüblichen Basislacken mit einer Verarbeitungsviskosität von 30"AK₄ bei 20°C im üblichen Naß-in-Naß-Verfahren in zwei Spritzgängen zu Trockenfilmen von 30 bis 45 µm appliziert. Die erhaltenen Filme wurden nach der Applikation 6 Minuten abgelüftet (abgedunstet), 10 Minuten bei 80°C vorgeliert und zuletzt 20 Minuten bei 150°C eingebrannt. Sie besaßen dann eine ausgezeichnete Härte, sehr hohen Glanz und erfüllten industriell übliche Öl/Ruß-Tests (Opel-Spezifikation GME 60403) ohne Veränderung der Oberfläche.

## Patentansprüche

1. Emulgatorfreies, hitzehärtbares Überzugsmittel in Form einer wäßrigen Emulsion, enthaltend
A) 30 bis 80 Gew.-% eines oder mehrerer, nach Neutralisation mit Basen wasserverdünnbarer Polyesteroligomer-Polyacrylate, erhältlich durch radikalische Polymerisation von
50 bis 95 Gew.-% eines oder mehrerer Ester ungesättigter Carbonsäuren mit hydrophoben und hydrophilen Anteilen, wobei
a) die hydrophoben Anteile auf monomeren Estern ungesättigter Carbonsäuren einer Alkoholkomponente mit noch mindestens einer sekundären OH-Gruppe basieren, die im Gemisch mit OH-Gruppen-freien Comonomeren vorliegen können, und
b) die hydrophilen Anteile auf monomeren Estern ungesättigter Carbonsäuren mit primären OH-Gruppen im Alkoholteil und monomeren Estern ungesättigter Carbonsäuren mit COOH-Gruppen basieren, die im Gemisch mit OH-Gruppen-freien Comonomeren vorliegen können,
wobei das Zahlenverhältnis von aus den Komponenten b) und a) stammenden primären zu sekundären OH-Gruppen im Copolymeren 1 : 1,5 bis 1 : 2,5 beträgt, in
5 bis 50 Gew.-% eines oder mehrerer hydroxyfunktioneller Polyesteroligomerer, erhältlich durch Polykondensation von einem oder mehreren Diolen und/oder Polyolen und einer oder mehreren Dicarbonsäuren und/oder deren Derivaten, mit einem errechneten Molekulargewicht von 200 bis 1000, einer Hydroxylzahl von 100 bis 600 und einer Säurezahl von 0 bis 15,
wobei die Monomeren a) und b) in derartigen Mengen eingesetzt werden, daß das Polyesteroligomer-Polyacrylat eine Hydroxylzahl von 100 bis 390 und eine Säurezahl von 16 bis 50 und ein Zahlenmittel des Molekulargewichts von 1000 bis 10000 aufweist,
wobei sich die Gew.-% jeweils auf den Festkörpergehalt beziehen und auf 100 Gew.-% addieren; und
B) 70 bis 20 Gew.-% eines oder mehrerer verkappter Polyisocyanate und/oder eines oder mehrerer Melaminharze, wobei mindestens eines der Melaminharze ein Hexamethoxymethylmelaminharz ist,
wobei sich die Gew.-% der Komponenten A) und B) jeweils auf das Festkörpergewicht der Harze beziehen und auf 100 Gew.-% addieren, und falls Polyisocyanate vorhanden sind das Verhältnis von OH-Gruppen der Komponente A) und verkappten NCO-Gruppen der Komponente B) bei 0,5 : 1 bis 2 : 1 liegt;
sowie Wasser und gegebenenfalls ein oder mehrere organische Lösemittel, Pigmente, Katalysatoren, Füllstoffe und/oder lackübliche Hilfsund Zusatzstoffe.

2. Überzugsmittel nach Anspruch 1, dadurch gekennzeichnet, daß die der Komponente A) zugrundeliegenden hydroxyfunktionellen Polyesteroligomeren unter Mitverwendung von einem oder mehreren Monoalkoholen und/oder von einer oder mehreren Monocarbonsäuren hergestellt wurden.

3. Überzugsmittel nach Anspruch 1 oder 2, worin die Komponente B) aus zwei oder mehreren verkappten Polyisocyanaten besteht, die sich im Polyisocyanatrest und/oder im Verkappungsmittel unterscheiden.

4. Verfahren zur Herstellung der Überzugsmittel nach einem der Ansprüche 1 bis 3, dadurch gekennzeichnet, daß man
A) 95 bis 50 Gewichtsteile eines oder mehrerer Ester ungesättigter Carbonsäuren mit hydrophoben und hydrophilen Anteilen, wobei
a) die hydrophoben Anteile auf monomeren Estern ungesättigter Carbonsäuren einer Alkoholkomponente mit noch mindestens einer sekundären OH-Gruppe basieren, die im Gemisch mit OH-Gruppen-freien Comonomeren vorliegen können, und
b) die hydrophilen Anteile auf monomeren Estern ungesättigter Carbonsäuren mit primären OH-Gruppen im Alkoholteil und monomeren Estern ungesättigter Carbonsäuren mit COOH-Gruppen basieren, die im Gemisch mit OH-Gruppen-freien Comonomeren vorliegen können,
in Gegenwart von
5 bis 50 Gewichtsteilen eines oder mehrerer hydroxyfunktioneller Polyesteroligomerer, erhältlich durch Polykondensation von einem oder mehreren Diolen und/oder Polyolen mit einer oder mehreren Dicarbonsäuren und/oder deren Derivaten, mit einem errechneten Molekulargewicht von 200 bis 1000, einer Hydroxylzahl von 100 bis 600 und einer Säurezahl von 0 bis 15
radikalisch polymerisiert, wobei die Monomeren a) und b) in derartigen Mengen eingesetzt werden, daß das erhaltene Polyesteroligomer-Polyacrylat eine Hydroxylzahl von 100 bis 390, eine Säurezahl von 16 bis 50 und ein Zahlenmittel des Molekulargewichts (Mn) von 1000 bis 10000 aufweist, und daß das Zahlenverhältnis von primären zu sekundären OH-Gruppen (die aus den Komponenten b) und a), ohne Berücksichtigung der OH-Gruppen des Polyesteroligomeren, stammen) 1 : 1,5 bis 1 : 2,5 beträgt,
wobei sich die Gewichtsteile jeweils auf das Festkörpergewicht beziehen und auf 100 Gewichtsteile addieren, worauf 30 bis 80 Gew.-% der erhaltenen Komponente A) vor oder nach dem Neutralisieren vermischt werden mit
B) 70 bis 20 Gew.-% eines oder mehrerer verkappter Polyisocyanate in derartigen Anteilen, daß das Verhältnis von OH-Gruppen der Komponente A) und verkappten NCO-Gruppen der Komponente B) bei 0,5 : 1 bis 2 : 1 liegt, und/oder eines oder mehrerer Melaminharze, wovon jedoch mindestens eines ein Hexamethoxymelaminharz ist,
worauf, gegebenenfalls nach Neutralisation, Wasser und gegebenenfalls ein oder mehrere organische Lösemittel, Pigmente, Füllstoffe und/oder lackübliche Hilfs- und Zusatzstoffe zugesetzt werden.

5. Verwendung der Überzugsmittel nach einem der Ansprüche 1 bis 3 in pigmenthaltiger Form, zur Herstellung von ein- oder mehrschichtigen Überzügen.

6. Verwendung der Überzugsmittel nach einem der Ansprüche 1 bis 3 in pigmentfreier Form, zur Herstellung von Klarlackschichten.

7. Verwendung der Überzugsmittel nach einem der Ansprüche 1 bis 3 in pigmentierter Form, zur Herstellung von Basislackschichten.

8. Verwendung der Überzugsmittel nach einem der Ansprüche 1 bis 3 zur Herstellung von Füllerschichten und/oder Basislackschichten und/oder Klarlackschichten in Mehrschichtlackierungen.

9. Verwendung der Überzugsmittel nach einem der Ansprüche 1 bis 3 zur Herstellung von Mehrschichtlackierungen auf dem Kraftfahrzeugsektor.

## Claims

1. Emulsifier-free, heat-curable coating agent in the form of an aqueous emulsion, containing
A) 30 to 80 wt.% of one or more polyester oligomer/polyacrylates that are water-thinnable after neutralisation with bases and can be obtained by free-radical polymerisation of
50 to 95 wt.% of one or more esters of unsaturated carboxylic acids containing hydrophobic and hydrophilic units, wherein
a) the hydrophobic units are based on monomeric esters of unsaturated carboxylic acids and an alcohol component containing at least one secondary OH group, which may be present mixed with OH group-free comonomers and
b) the hydrophilic units are based on monomeric esters of unsaturated carboxylic acids with primary OH groups in the alcohol part and monomeric esters of unsaturated carboxylic acids with COOH groups, which may be present mixed with OH group-free comonomers,
the numerical ratio of primary to secondary OH groups derived from the components b) and a) in the copolymer being 1:1.5 to 1:2.5,
in 5 to 50 wt.% of one or more hydroxyfunctional polyester oligomers obtainable by polycondensation of one or more diols and/or polyols and one or more dicarboxylic acid and/or their derivatives, with a calculated molecular weight of 200 to 1000, a hydroxyl number of 100 to 600, and an acid value of 0 to 15,
the monomers a) and b) being used in such amounts that the polyester oligomer/polyacrylate has a hydroxyl number of 100 to 390 and an acid value of 16 to 50 and a number average molecular weight of 1000 to 10000,
the percentages by weight in each case referring to the solids content and adding up to 100 wt.%; and
B) 70 to 20 wt.% of one or more capped polyisocyanates, and/or one or more melamine resins, at least one of the melamine resins however being a hexamethoxymethyl melamine resin,
the percentages by weight of the components A) and B) in each case referring to the solids content of the resins and adding up to 100 wt.%, and if polyisocyanates are present the ratio of OH groups of the component A) and capped NCO groups of the component B) is 0.5:1 to 2:1,
as well as water and optionally one or more organic solvents, pigments, fillers, catalysts and/or auxiliaries and additives conventionally used in lacquers.

2. Coating agent according to claim 1, characterised in that the hydroxyfunctional polyester oligomers forming the basis of component A) are prepared with the co-use of one or more monohydric alcohols and/or one or more monocarboxylic acids.

3. Coating agent according to claim 1 or 2, wherein the component B) comprises two or more capped polyisocyanates that differ as regards the polyisocyanate radical and/or the capping agent.

4. Process for producing the coating agents according to one of claims 1 to 3, characterised in that
A) 95 to 50 parts by weight of one or more esters of unsaturated carboxylic acids containing hydrophobic and hydrophilic units, in which
a) the hydrophobic units are based on monomeric esters of unsaturated carboxylic acids and an alcohol component containing at least one OH group, which may be present mixed with OH group-free comonomers, and
b) the hydrophilic units are based on monomeric esters of unsaturated carboxylic acids with primary OH groups in the alcohol part and monomeric esters of unsaturated carboxylic acids containing COOH groups, which may be present mixed with OH group-free comonomers,
are polymerized by a free-radical mechanism in the presence of
5 to 50 parts by weight of one or more hydroxyfunctional polyester oligomers obtainable by polycondensation of one or more diols and/or polyols with one or more dicarboxylic acids and/or their derivatives, with a calculated molecular weight of 200 to 1000, a hydroxyl number of 100 to 600 and an acid value of 0 to 15, the monomers a) and b) being used in such amounts that the resultant polyester oligomer/polyacrylate has a hydroxyl number of 100 to 390, an acid value of 16 to 50 and a number average molecular weight (Mn) of 1000 to 10000, and that the numerical ratio of primary to secondary OH groups (derived from the components b) and a), excluding the OH groups of the polyester oligomer), is 1:1.5 to 1:2.5,
the parts by weight in each case referring to solids content and adding up to 100 parts by weight,
following which 30 to 80 wt.% of the resultant component A) is mixed, before or after the neutralisation, with
B) 70 to 20 wt.% of one or more capped polyisocyanates in such amounts that the ratio of OH groups of the component A) and capped NCO groups of the component B) is 0.5 : 1 to 2:1, and/or one or more melamine resins, at least one of which however is a hexamethoxymelamine resin,
following which there are added, optionally after neutralisation, water and optionally one or more organic solvents, pigments, fillers and/or auxiliaries and additives conventionally used in lacquers.

5. Use of the coating agents according to one of claims 1 to 3 in pigment-containing form, to produce single-layer or multilayer coatings.

6. Use of the coating agents according to one of claims 1 to 3 in pigment-free form, to produce clear lacquer layers.

7. Use of the coating agents according to one of claims 1 to 3 in pigmented form, to produce base lacquer layers.

8. Use of the coating agents according to one of claims 1 to 3 to produce filler layers and/or base lacquer layers and/or clear lacquer layers in multilayer lacquer coatings.

9. Use of the coating agents according to one of claims 1 to 3 to produce multilayer lacquer coatings in the automobile sector.

## Revendications

1. Composition de revêtement thermodurcissable, sans émulsifiant, sous forme d'une émulsion aqueuse, contenant
A) 30 à 80 % en poids d'un ou plusieurs polyesters oligomères-polyacrylates diluables dans l'eau après neutralisation par des bases, obtenus par polymérisation radicalaire de
50 à 95 % en poids d'un ou plusieurs esters d'acides carboxyliques insaturés comportant des parties hydrophobes et des parties hydrophiles,
a) les parties hydrophobes étant fondées sur des esters monomères d'acides carboxyliques insaturés avec un composant alcool comportant encore au moins un groupe OH secondaire, pouvant se présenter en mélange avec des comonomères sans groupe OH et
b) les parties hydrophiles étant fondées sur des esters monomères d'acides carboxyliques insaturés comportant des groupes OH primaires dans la partie alcool et sur des esters monomères d'acides carboxyliques insaturés comportant des groupes COOH, pouvant se présenter en mélange avec des comonomères sans groupe OH,
le nombre de groupes OH primaires et de groupes OH secondaires provenant des composants b) et a) dans le copolymère étant dans un rapport compris entre 1:1,5 et 1:2,5, dans
5 à 50 % en poids d'un ou plusieurs polyesters oligomères ayant des hydroxy fonctionnels, obtenus par polycondensation d'un ou plusieurs diols et/ou de polyols et d'un ou plusieurs acides dicarboxyliques et/ou de leurs dérivés, présentant un poids moléculaire calculé compris entre 200 et 1000, un indice hydroxyle compris entre 100 et 600 et un indice d'acide compris entre 0 et 15,
les monomères a) et b) étant utilisés en quantités telles que le polyester oligomère-polyacrylate présente un indice hydroxyle compris entre 100 et 390 et un indice d'acide compris entre 16 et 50 et un poids moléculaire moyen en nombre compris entre 1000 et 10 000,
les % en poids se rapportant à la teneur en matière solide et leur somme étant égale à 100 % en poids ; et
B) 70 à 20 % en poids d'un ou plusieurs polyisocyanates masqués et/ou d'une ou plusieurs résines de mélamine, au moins l'une des résines de mélamine étant une résine d'hexaméthoxyméthylmélamine,
les % en poids des composants A) et B) se rapportant au poids de la matière solide des résines et leur somme étant égale à 100 % en poids, les groupes OH du composant A) et les groupes NCO masqués du composant B) étant dans un rapport compris entre 0,5:1 et 2:1 ;
ainsi que l'eau et éventuellement un ou plusieurs solvants organiques, des pigments, des catalyseurs, des matières de charge et/ou des adjuvants et additifs usuels pour les vernis.

2. Composition de revêtement selon la revendication 1, caractérisée en ce que les polyesters oligomères ayant des hydroxy fonctionnels à la base du composant A) sont préparés en utilisant conjointement un ou plusieurs monoalcools et/ou un ou plusieurs acides monocarboxyliques.

3. Composition de revêtement selon la revendication 1 ou 2 où le composant B) est constitué de deux ou plusieurs polyisocyanates bloqués, se différenciant dans le reste polyisocyanate et/ou dans le réactif de blocage.

4. Procédé pour la préparation des compositions de revêtement selon l'une des revendications 1 à 3, caractérisé en ce que l'on polymérise par voie radicalaire
95 à 50 % en poids d'un ou plusieurs esters d'acides carboxyliques insaturés comportant des parties hydrophobes et des parties hydrophiles,
a) les parties hydrophobes étant fondées sur des esters monomères d'acides carboxyliques insaturés avec un composant alcool comportant encore au moins un groupe OH secondaire, pouvant se présenter en mélange avec des comonomères sans groupe OH et
b) les parties hydrophiles étant fondées sur des esters monomères d'acides carboxyliques insaturés comportant des groupes OH primaires dans la partie alcool et sur des esters monomères d'acides carboxyliques insaturés comportant des groupes COOH, pouvant se présenter en mélange avec des comonomères sans groupe OH,
en présence de
5 à 50 parties en poids d'un ou plusieurs polyesters oligomères ayant des hydroxy fonctionnels, obtenus par polycondensation d'un ou plusieurs diols et/ou de polyols et d'un ou plusieurs acides dicarboxyliques et/ou de leurs dérivés, présentant un poids moléculaire calculé compris entre 200 et 1000, un indice hydroxyle compris entre 100 et 600 et un indice d'acide compris entre 0 et 15,
les monomères a) et b) étant utilisés en quantités telles que le polyester oligomère-polyacrylate obtenu présente un indice hydroxyle compris entre 100 et 390, un indice d'acide compris entre 16 et 50 et un poids moléculaire moyen en nombre (Mn) compris entre 1000 et 10 000 et en ce que le nombre des groupes OH primaires et des groupes OH secondaires (provenant des composants b) et a), sans tenir compte des groupes OH du polyester oligomère) sont dans un rapport compris entre 1:1,5 et 1:2,5,
les parties en poids se rapportant au poids de la matière solide et leur somme étant égale à 100,
en ce que l'on mélange ensuite, avant ou après la neutralisation, 30 à 80 % en poids du composant A) obtenu avec
B) 70 à 20 % en poids d'un ou plusieurs polyisocyanates masqués en proportions telles que les groupes OH du composant A) et les groupes NCO masqués du composant B) soient dans un rapport compris entre 0,5:1 et 2:1 et/ou d'une ou plusieurs résines de mélamine, dont toutefois l'une au moins est une résine d'hexaméthoxyméthyl-mélamine, en ce que l'on additionne ensuite, éventuellement après neutralisation, de l'eau et éventuellement un ou plusieurs solvants organiques, des pigments, des matières de charge et/ou des adjuvants et additifs usuels pour les vernis.

5. Utilisation des compositions de revêtement selon l'une des revendications 1 à 3 sous une forme contenant des pigments pour la réalisation de revêtements mono- ou multicouches.

6. Utilisation des compositions de revêtement selon l'une des revendications 1 à 3 sous une forme ne contenant pas de pigment pour la réalisation de couches de vernis transparents.

7. Utilisation des compositions de revêtement selon l'une des revendications 1 à 3 sous une forme contenant des pigments pour la réalisation de couches de vernis de base.

8. Utilisation des compositions de revêtement selon l'une des revendications 1 à 3 pour la réalisation de couches de remplissage et/ou de couches de vernis de base et/ou de couches de vernis transparents dans des revêtements multicouches.

9. Utilisation des compositions de revêtement selon l'une des revendications 1 à 3 pour la réalisation de revêtements multicouches dans le secteur automobile.
